# EUROPEAN PATENT SPECIFICATION

(11) **EP 2 191 059 B1**
(45) Date of publication and mention of the grant of the patent: **01.04.2015**
(21) Application number: 08831332.5
(22) Date of filing: 19.09.2008
(51) Int. Cl.: C09D 177/10, C09D 179/08, D06P 5/00, D06P 1/52, D06P 3/24, D06M 101/36, D06M 15/59

(54) **COATED FIBER AND METHOD FOR MAKING THE COATED FIBER**
BESCHICHTETE FASER SOWIE VERFAHREN ZUR HERSTELLUNG DER BESCHICHTETEN FASER
FIBRE REVÊTUE ET SON PROCÉDÉ DE FABRICATION

(30) Priority: 19.09.2007 US 857469
(43) Date of publication of application: 02.06.2010
(73) Proprietor: SABIC Innovative Plastics IP B.V., 4612 PX Bergen op Zoom (NL)
(72) Inventor: KOENIGER, Rainer, Clifton Park New York 12065 (US); MERFELD, Glen David, Niskayuna New York 12309 (US); PRAMEELA, Susarla, Clifton Park New York 12065 (US)
(74) Representative: Office Freylinger
(86) International application number: PCT/US2008/076986
(87) International publication number: WO 2009/039353

(56) References cited:
- EP-A- 0 151 722
- JP-A- 9 307 203
- US-B1- 6 479 581

## Description

### BACKGROUND

The invention includes embodiments that relate to a coated fiber. The invention includes embodiments that relate to a coated aramid fiber and methods for making the coated aramid fiber.

Polymeric fibers find wide application in modem commerce and technology in applications including apparel, furnishings, medical textiles, filtration media, composite reinforcement, and ballistic-resistant garments. Certain polymeric fibers, for example p-aramids, display outstanding tensile properties and resistance to temperature, chemicals, and fire. Despite their excellent property profile, the aramid fibers need certain improvements; for example, it is known that aramid fibers are susceptible to degradation by UV light; further, dyeability of aramid fibers in some instances is relatively poor. In applications such as safety and protective garments, and particularly in those applications requiring high "visibility", the ability to dye aramid fibers would be very desirable.

In instances wherein the aramid fibers can be dyed through the use of a fiber coating, such coating or the process by which the coating is applied to the fiber, typically degrades the physical properties of the aramid fiber, for example the fire resistance of the fiber.

WO2012046039 describes a a textile having a camouflage pattern thereon including: a textile piece having a polymeric coating; and one or more light absorbing substances which are adhered to the polymeric coating so as to form a camouflage pattern, in which the polymeric coating includes a polymer formed by polymerising a polymeric precursor which includes a group of the Formula I where R² and R³ are independently selected from (CR⁷R⁸)n, or a group CR⁹R¹⁰, CR⁷R⁸CR⁹R¹⁰ or CR⁹R¹⁰CR⁷R⁸ where n is 0, 1 or 2, R⁷ and R⁸ are independently selected from hydrogen, halo or hydrocarbyl, and either one of R⁹ or R¹⁰ is hydrogen and the other is an electron withdrawing group, or R9 and R¹⁰ together form an electron withdrawing group; and R⁴ and R⁵ are independently selected from CH or CR¹¹ where R¹¹ is an electron withdrawing group, the dotted lines indicate the presence or absence of a bond, X¹ is a group CX²X³ where the dotted line bond to which it is attached is absent and a group CX² where the dotted line bond to which it is attached is present, Y¹ is a group CY²Y³ where the dotted line bond to which it is attached is absent and a group CY² where the dotted line bond to which it is attached is present, and X², X³, Y² and Y³ are independently selected from hydrogen, fluorine or other substituents, R¹ is selected from hydrogen, halo, nitro, hydrocarbyl, optionally substituted or interposed with functional groups, or (Formula (II)); and R¹³ is C(O) or S(O)₂.

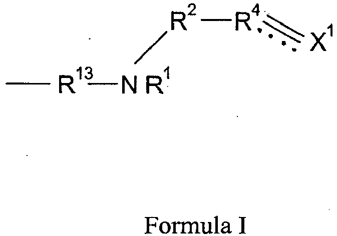

JPH09307203 (A) describes a way to improve the bonding strength of a nonwoven base material to a resin and improve the reliability of a printed circuit board, in the printed circuit board using as its base material a nonwoven fabric made of a totally aromatic polyamide fiber. This result is achieved by using respectively a totally aromatic polyamide fiber and a polyamic acid resin as a main component and a binder, or processing a nonwoven fabric made of a totally aromatic polyamide fiber by dipping it into a polyamic acid resin solution, a base material is obtained by drying. Then, by impregnating the base material with a resin varnish and drying it thereafter, on an obtained prepreg a copper foil is laminated and they are integrated with each other by heating and pressing to obtain a desired printed circuit board.

EP0151722 relates to a process to produce resin matrix materials. More particularly, it relates to an improved method to prepare resin-reinforced fiber composites, such as sheets and tapes, and their consolidation under heat and pressure into laminates. More particularly, EP0151722 describes a process for the preparation of a polyimide resin-fibrous reinforced composite comprising the steps of :
(i) impregnating a fibrous reinforcement with a solution in an organic solvent of a thermoplastic polyimide, and
(ii) removing the organic solvent from said impregnated reinforcement, said organic solvent comprising in admixture a first solvent component (a) selected from the group consisting of chloromethane, dichloromethane, trichloromethane, dichloroethane, trichloroethane and methoxybenzene; and a second co-solvent component (b), different from, but compatible with and of lower volatility than said first solvent component (a), selected from the group consisting of dichloromethane, trichloromethane, dichloroethane, trichloroethane, methoxybenzene, tetrachloromethane, trichloroethylene, chlorobenzene and butyrolactone, the amount of (b) in said solvent being at least sufficient to reduce the evaporation rate of the admixture but not in excess of an amount which causes separation of said polyimide therefrom.

There exists a need for a coated fiber and a coating method that may enhance the performance of the underlying fiber while preserving the desirable attributes of the fiber. Furthermore, there exists a need for a coated fiber that provides the ability to accept dyes and additives on the surface of the fiber, while preserving desirable attributes such as the fire resistant properties of the fiber.

### BRIEF DESCRIPTION

In one embodiment, the present invention provides a coated fiber, wherein the coated fiber comprises (a) an inner fiber comprising an aramid and (b) an outer coating comprising a polyamic acid deposited on the inner fiber wherein the outer coating comprises a UV stabilizer, a colorant, or both, wherein said coated fiber is in the form of staple fibers, filaments, yarns, cords, or ropes.

In another embodiment, the present invention provides a coated fiber, wherein the coated fiber comprises (a) an inner fiber comprising an aramid and (b) an outer coating comprising a polyetherimide deposited on the inner fiber wherein the outer coating comprises a UV stabilizer, a colorant, or both, wherein said coated fiber is in the form of staple fibers, filaments, yarns, cords, or ropes.

In still another embodiment, the present invention provides a coated fiber wherein, the coated fiber comprises an inner fiber comprising an aramid and an outer coating comprising a polyamic acid deposited on the inner fiber, wherein the aramid comprises structural units (III): 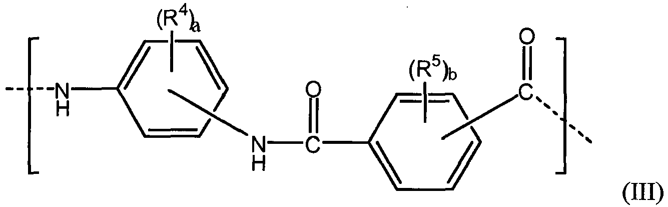 wherein R⁴ and R⁵ are independently at each occurrence a C₁-C₂₀ aliphatic radical, a C₂-C₂₀ cycloaliphatic radical, or a C₂-C₂₀ aromatic radical; and 'a' and 'b' are independently integers having a value of 0 to 4.

In still another embodiment, the present invention provides a method for making a coated fiber comprising, contacting a solution comprising a polyamic acid with a fiber comprising an aramid to provide a coated fiber; wherein the coated fiber comprises (a) an inner fiber comprising the aramid, and (b) an outer coating comprising the polyamic acid deposited on the inner fiber wherein the outer coating comprises a UV stabilizer, a colorant, or both, wherein said coated fiber is in the form of staple fibers, filaments, yarns, cords, or ropes.

In still another embodiment, the present invention provides a method for making a coated fiber comprising, contacting a solution comprising a polyetherimide with a fiber comprising an aramid to provide a coated fiber; wherein the coated fiber comprises (a) an inner fiber comprising the aramid; and (b) an outer coating comprising the polyetherimide deposited on the inner fiber wherein the outer coating comprises a UV stabilizer, a colorant, or both, wherein said coated fiber is in the form of staple fibers, filaments, yarns, cords, or ropes..

These and other features, aspects, and advantages of the present invention may be understood more readily by reference to the following detailed description.

### BRIEF DESCRIPTION OF FIGURES

Fig. 1 is a graphical representation of variation in coating thickness with time and with concentration of coating composition.
Fig. 2 represents coated fibers in accordance with an embodiment of the invention.
Fig. 3 represents coated fibers in accordance with an embodiment of the invention.
Fig. 4 represents dyed coated fibers in accordance with an embodiment of the invention.

### DETAILED DESCRIPTION

In the following specification and the claims, which follow, reference will be made to a number of terms, which shall be defined to have the following meanings.

The singular forms "a", "an", and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about" and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

Molecular weight ranges disclosed herein refer to molecular weight as determined by gel permeation chromatography using polystyrene standards.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2), anthraceneyl groups (n = 3) and the like. The aromatic radical may also include nonaromatic components. For example, a benzyl group is an aromatic radical which,comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄-. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylphenyl radical is a C₇ aromatic radical comprising a methyl group, the methyl group being a functional group which is an alkyl group. Similarly, the 2-nitrophenyl group is a C₆ aromatic radical comprising a nitro group, the nitro group being a functional group. Aromatic radicals include halogenated aromatic radicals such as 4-trifluoromethylphenyl, hexafluoroisopropylidenebis(4-phen-1-yloxy) (i.e., -OPhC(CF₃)₂PhO-), 4-chloromethylphen-1-yl, 3-trifluorovinyl-2-thienyl, 3-trichloromethylphen-1-yl (i.e., 3-CCl₃Ph-), 4-(3-bromoprop-1-yl)phen-1-yl (i.e., 4-BrCH₂CH₂CH₂Ph-), and the like. Further examples of aromatic radicals include 4-allyloxyphen-1-oxy, 4-aminophen-1-yl (i.e., 4-H₂NPh-), 3-aminocarbonylphen-1-yl (i.e., NH₂COPh-), 4-benzoylphen-1-yl, dicyanomethylidenebis(4-phen-1-yloxy) (i.e., -OPhC(CN)₂PhO-), 3-methylphen-1-yl, methylenebis(4-phen-1-yloxy) (i.e., -OPhCH₂PhO-), 2-ethylphen-1-yl, phenylethenyl, 3-formyl-2-thienyl, 2-hexyl-5-furanyl, hexamethylene-1,6-bis(4-phen-1-yloxy) (i.e.,-OPh(CH₂)₆PhO-), 4-hydroxymethylphen-1-yl (i.e., 4-HOCH₂Ph-), 4-mercaptomethylphen-1-yl (i.e., 4-HSCH₂Ph-), 4-methylthiophen-1-yl (i.e., 4-CH₃SPh-), 3-methoxyphen-1-yl, 2-methoxycarbonylphen-1-yloxy (e.g., methyl salicyl), 2-nitromethylphen-1-yl (i.e., 2-NO₂CH₂Ph), 3-trimethylsilylphen-1-yl, 4-t-butyldimethylsilylphenl-1-yl, 4-vinylphen-1-yl, vinylidenebis(phenyl), and the like. The term "a C₃ - C₁₀ aromatic radical" includes aromatic radicals containing at least three but no more than 10 carbon atoms. The aromatic radical 1-imidazolyl (C₃H₂N₂-) represents a C₃ aromatic radical. The benzyl radical (C₇H₇-) represents a C₇ aromatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group (C₆H₁₁CH₂-) is a cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylcyclopent-1-yl radical is a C₆ cycloaliphatic radical comprising a methyl group, the methyl group being a functional group which is an alkyl group. Similarly, the 2-nitrocyclobut-1-yl radical is a C₄ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene-2,2-bis (cyclohex-4-yl) (i.e., -C₆H₁₀C(CF₃)₂ C₆H₁₀-), 2-chloromethylcyclohex-1-yl, 3-difluoromethylenecyclohex-1-yl, 4-trichloromethylcyclohex-1-yloxy, 4-bromodichloromethylcyclohex-1-ylthio, 2-bromoethylcyclopent-1-yl, 2-bromopropylcyclohex-1-yloxy (e.g., CH₃CHBrCH₂C₆H₁₀O-), and the like. Further examples of cycloaliphatic radicals include 4-allyloxycyclohex-1-yl, 4-aminocyclohex-1-yl (i.e., H₂NC₆H₁₀-), 4-aminocarbonylcyclopent-1-yl (i.e., NH₂COC₅H₈-), 4-acetyloxycyclohex-1-yl, 2,2-dicyanoisopropylidenebis(cyclohex-4-yloxy) (i.e., -OC₆H₁₀C(CN)₂C₆H₁₀O-), 3-methylcyclohex-1-yl, methylenebis(cyclohex-4-yloxy) (i.e., -OC₆H₁₀CH₂C₆H₁₀O-), 1-ethylcyclobut-1-yl, cyclopropylethenyl, 3-formyl-2-terahydrofuranyl, 2-hexyl-5-tetrahydrofuranyl, hexamethylene-1,6-bis(cyclohex-4-yloxy) (i.e., -O C₆H₁₀(CH₂)₆C₆H₁₀O-), 4-hydroxymethylcyclohex-1-yl (i.e., 4-HOCH₂C₆H₁₀-), 4-mercaptomethylcyclohex-1-yl (i.e., 4-HSCH₂C₆H₁₀-), 4-methylthiocyclohex-1-yl (i.e., 4-CH₃SC₆H₁₀-), 4-methoxycyclohex-1-yl, 2-methoxycarbonylcyclohex-1-yloxy (2-CH₃OCOC₆H₁₀O-), 4-nitromethylcyclohex-1-yl (i.e., NO₂CH₂C₆H₁₀-), 3-trimethylsilylcyclohex-1-yl, 2-t-butyldimethylsilylcyclopent-1-yl, 4-trimethoxysilylethylcyclohex-1-yl (e.g., (CH₃O)₃SiCH₂CH₂C₆H₁₀-), 4-vinylcyclohexen-1-yl, vinylidenebis(cyclohexyl), and the like. The term "a C₃ - C₁₀ cycloaliphatic radical" includes cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

As used herein the term "aliphatic radical" refers to an organic radical having a valence of at least one consisting of a linear or branched array of atoms which is not cyclic. Aliphatic radicals are defined to comprise at least one carbon atom. The array of atoms comprising the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups , conjugated dienyl groups, alcohol groups, ether groups, aldehyde groups, ketone groups, carboxylic acid groups, acyl groups (for example carboxylic acid derivatives such as esters and amides), amine groups, nitro groups, and the like. For example, the 4-methylpent-1-yl radical is a C₆ aliphatic radical comprising a methyl group, the methyl group being a functional group which is an alkyl group. Similarly, the 4-nitrobut-1-yl group is a C₄ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (i.e.,-CONH₂), carbonyl, 2,2-dicyanoisopropylidene (i.e., -CH₂C(CN)₂CH₂-), methyl (i.e.,-CH₃), methylene (i.e., -CH₂-), ethyl, ethylene, formyl (i.e.,-CHO), hexyl, hexamethylene, hydroxymethyl (i.e.,-CH₂OH) mercaptomethyl (i.e., -CH₂SH), methylthio (i.e., -SCH₃), methylthiomethyl (i.e., -CH₂SCH₃), methoxy, methoxycarbonyl (i.e., CH₃OCO-), nitromethyl (i.e., -CH₂NO₂), thiocarbonyl, trimethylsilyl (i.e., (CH₃)₃Si-), t-butyldimethylsilyl, 3-trimethyoxysilylpropyl (i.e., (CH₃O)₃SiCH₂CH₂CH₂-), vinyl, vinylidene, and the like. By way of further example, a C₁ -C₁₀ aliphatic radical contains at least one but no more than 10 carbon atoms. A methyl group (i.e., CH₃-) is an example of a C₁ aliphatic radical. A decyl group (i.e., CH₃(CH₂)₉-) is an example of a C₁₀ aliphatic radical.

In one embodiment, the polyamic acid may comprise structural units (I): 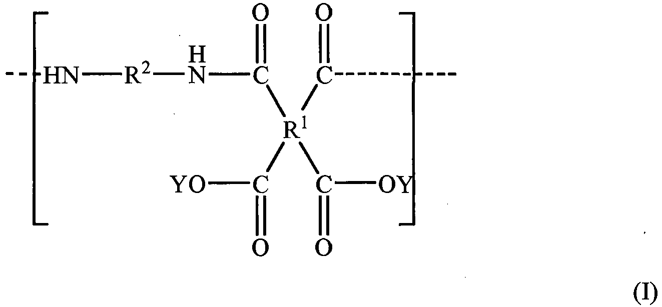 wherein R¹ is a C₂-C₁₂ aliphatic radical, a C₆-C₅₀ cycloaliphatic radical, or a C₆-C₅₀ aromatic radical; R² is a C₁-C₂₀ aliphatic radical, a C₂-C₂₀ cycloaliphatic radical, or a C₂-C₂₀ aromatic radical; and Y is hydrogen, or a charge-balancing cation, such as for example, triethylammonium cation (Et₃NH⁺) or trimethylammonium cation (Me₃NH⁺).

In one embodiment, the polyamic acid comprises structural units derived from a diamine and structural units derived from a dianhydride. Non-limiting examples of suitable diamines include 1,3-phenylenediamine (m-PDA); 1,4-phenylenediamine (p-PDA); 1,2-phenylenediamine; 4,4-diaminodiphenylether; paraxylylenediamine; 4,4-diaminodiphenylmethane; 4,4-diaminodiphenylsulfone; benzidine; 3,3'-dimethoxybenzidine; 3,3'-diaminobenzophenone; 3,4'-diaminobenzophenone; 3,3'-diaminodiphenylsulfone; 3,4'-diaminodiphenylsulfone; 3,3'-diaminodiphenylmethane; 3,4'-diaminodiphenylmethane; 3,3'-diaminodiphenylsulfide; 3,4'-diaminodiphenylsulfide; 3,3'-diaminodiphenylether; 3,4'-diaminodiphenylether; 3,3'-diaminobenzophenone; 2,4-diaminotoluene; 1,4-diamino-2-methoxybenzene; 2,5-diaminoxylene; 1,3-diamino-4-chlorobenzene; 1,4-diamino-2,5-dichlorobenzene; 1,4-diamino-2-bromobenzene; 1,3-diamino-4-isopropylbenzene; 2,2-bis(4'-aminophenyl)propane; 4,4'-diaminodiphenylmethane; 2,2'-or 4,4'-diaminostilbene; 4,4'-diamino-2,2',3,3',5,5',6,6'-octafluorodiphenylmethane; 4,4'-diamino-2,2',3,3',5,5',6,6'-octafluorodiphenylether; 4,4'-diaminodiphenylether; 4,4'-diamino-2,2',3,3',5,5',6,6'-octafluorodiphenylether; 4,4'-diaminodiphenylthioether; 4,4'-diaminodiphenylsulfone; 4-aminophenyl 4-aminobenzoate; 2,2'- or 4,4'-diaminobenzophenone; 2,3-diaminobenzophenone; 4-(4-aminophenylcarbamoyl)aniline; bis(4-aminophenyl) phenyl phosphine oxide; bis(3-aminophenyl) methylphosphine oxide; bis(4-aminophenyl)methylphosphine oxide; bis(4-aminophenyl) cyclohexylphosphine oxide; N,N-bis(4-aminophenyl)aniline; N,N-bis(4-aminophenyl)-N-methylamine; 2,2'-,3,3'-, or 4,4'-diaminoazobenzene; 4,4'-diaminodiphenylurea; 1,8- or 1,5-diaminonaphthalene; 1,5-diaminoanthraquinone; diaminofluoranthene; 3,9-diaminochrysene; diaminopyrene; bis(4-aminophenyl)diethylsilane; bis(4-aminophenyl) dimethylsilane; bis (4-aminophenyl)tetramethyldisiloxane; 2,6-diaminopyridine; 2,4-diaminopyrimidine; 3,6-diaminoacridine; 2,4-diamino-S-triazine; 2,7-diaminodibenzofuran; 2,7-diaminocarbazole; 3,7-diaminophenothiazine; 5,6-diamino-1,3-dimethyluracil; 2,5-diamino-1,3,4-thiadiazole; dimethylenediamine; trimethylenediamine; tetramethylenediamine; hexamethylenediamine; heptamethylenediamine; octamethylenediamine; nonamethylenediamine; decamethylenediamine; 2,2-dimethylpropylenediamine; 2,5-dimethylhexamethylenediamine; 2,5-dimethylheptamethylenediamine; 4,4-dimethylheptamethylenediamine; 3-methylheptamethylenediamine; 3-methoxyhexamethylenediamine; 5-methylnonamethylenediamine; 1,12-diaminooctadecane; 2,11-diaminododecane; 1,2-bis(3-aminopropoxy)ethane; and combinations thereof. In one embodiment, the diamine is 1,3-phenylenediamine (m-PDA).

Non-limiting examples of suitable dianhydrides include aromatic tetracarboxylic acid dianhydrides such as, para-phenylenebis(trimellitic acid monoester acid anhydride) (TMHQ); pyromellitic tetracarboxylic acid dianhydride (PMDA); 3,3',4,4'-biphenyltetracarboxylic acid dianhydride (BPDA); 2,3',3,4'-biphenyltetracarboxylic acid dianhydride; 3,3'-4,4'-benzophenonetetracarboxylic acid diandydride; 1,4-bis(3,4-dicaroxyphenoxy)benzene tetracarboxylic acid dianhydride (BDPDA); 4,4'-(4,4'-isopropylidenediphenoxy)bis(phthalic anhydride) (BPADA); 2,3,3',4'-benzophenone tetracarboxylic acid dianhydride; 2,2',3,3'-benzophenone tetracarboxylic acid dianhydride; 4,4',5,5',6,6'-hexafluorobenzophenone-2,2',3,3'-tetracarboxylic acid dianhydride; 3,3',4,4'-biphenyltetracarboxylic acid dianhydride; 2,2',3,3'-biphenyl tetracarboxylic acid dianhydride; bis(2,3-dicarboxyphenyl)methane dianhydride; bis(2,5,6,-trifluoro-3,4-dicarboxyphenyl)methane dianhydride; 1,1-bis(3,4-dicarboxyphenyl)ethane dianhydride; 2,2-bis(3,4-dicarboxyphenyl)propane dianhydride; 2,2-bis(2,3-dicarboxyphenyl)propane dianhydride; bis(2,3-dicarboxyphenyl) ether dianhydride; bis(2,5,6-trifluoro-3,4-dicarboxyphenyl) ether dianhydride; bis(2,5,6-trifluoro-3,4-dicaroboxyphenyl) sulfone dianhydride; bis(3,4-dicarboxyphenyl) phenylphosphonate dianhydride; bis(3,4-dicarboxyphenyl) phenylphosphine oxide dianhydride; N,N-(3,4-dicarboxyphenyl)-N-methylamine dianhydride; bis(3,4-dicarboxyphenyl) diethylsilane dianhydride; bis(3,4-dicarboxyphenyl)-tetramethyl disiloxane dianhydride; (3,3',4,4'-tetracarboxybenzoyloxybenzene dianhydride; 1,4,5,8-naphthalenetetracarboxylic acid dianhydride; 2,3,6,7-naphthalenetetracarboxylic acid dianhydride; 1,2,5,6-naphthalenetetracarboxylic acid dianhydride; 2,6-dichloronapthalene-1,4,5,8-tetracarboxylic acid dianhydride; 2,7-dichloronaphthalene-1,4,5,8-tetracarboxylic acid dianhydride; 2,3,6,7-tetrachloronaphthalene-1,4,5,8-tetracarboxylic acid dianhydride; 1,4,5,8-tetrafluoronaphthalene-2,3,6,7-tetracarboxylic acid dianhydride; 1,8,9,10-phenanthrenetetracarboxylic acid dianhydride; 3,4,9,10-perylenetetracarboxylic acid dianhydride; 2,3,4,5-thiophenetetracarboxylic acid dianhydride; 2,3,5,6-pyrazinetetracarboxylic acid dianhydride; 2,3,5,6-pyridinetetracarboxylic acid dianhydride; 3,3',4,4'-azobenzenetetracarboxylic acid dianhydride; 3,3',4,4'-azoxybenzenetetracarboxylic acid dianhydride; 1,2,3,4-cyclopentanetetracarboxylic acid dianhydride; ethylenetetracarboxylic acid dianhydride; 1,2,3,4-butanetetracarboxylic acid dianhydride; tetrahydrofuran-2,3,4,5-tetracarboxylic acid dianhydride; and combinations thereof. In one embodiment, the dianhydride used is 4,4'-(4,4'-isopropylidenediphenoxy)bis(phthalic anhydride) (BPADA).

In one embodiment, the polyamic acid has a number average molecular weight of more than 5,000 grams per mole. In another embodiment, the polyamic acid has a number average molecular weight of more than 8,000 grams per mole. In yet another embodiment, the polyamic acid has a number average molecular weight of more than 12,000 grams per mole.

In one embodiment, the polyamic acid has a number average molecular weight of less than 5,000 grams per mole. In another embodiment, the polyamic acid has a number average molecular weight of less than 3,000 grams per mole. In yet another embodiment, the polyamic acid has a number average molecular weight of less than 1,500 grams per mole.

In still another embodiment, the polyamic acid has a number average molecular weight in a range between about 500 and about 100,000 grams per mole. In still yet another embodiment, the polyamic acid has a number average molecular weight in a range between about 5,000 and about 50,000 grams per mole.

In one embodiment, the polyamic acid may be prepared by reacting a diamine with an aromatic tetracarboxylic acid dianhydride in the presence of a solvent, as discussed in U.S. Patent No. 3,766,117. In one embodiment, the solvents employed for the preparation of the polyamic acid comprise a non-protic organic solvent, a halogenated alkyl-type organic solvent, an aromatic organic solvent, an ether-type organic solvent, or a combination thereof. Suitable non-limiting examples of the non-protic solvents include ureas such as tetramethylurea, and N,N-dimethylurea; sulfoxides and sulfones such as dimethylsulfoxide, diphenylsulfone, amides such as N,N-dimethylacetamide, N,N-dimethylformamide, N-methyl-2-pyrrolidone, phosphopryl amides, and combinations thereof. Suitable non-limiting examples of halogenated alkyl-type organic solvents include chloroform, methylene chloride, and combinations thereof. Suitable non-limiting examples of aromatic organic solvents include aromatic hydrocarbons such as benzene, and toluene; phenols such as phenol and cresol; and combinations thereof. Suitable non-limiting examples ether-type organic solvents include diethyl ether, dipropyl ether, dimethyl ether, diisopropyl ether, dibutyl ether, diisoamyl ether, 1,2-dimethoxyethane, 1,2-diethoxyethane, di-2-methoxyethyl ether, tetrahydrofuran, tetrahydropyran, 1,4-dioxane, and combinations thereof. The solvents listed above are usually used solely, but two or more of the solvents may be used in combination thereof. In one embodiment, the solvent employed is an ether-type organic solvent, such as for example, tetrahydrofuran.

In another embodiment, the polyamic acid may be rendered water soluble by employing a slight variation in the process of preparing the polyamic acid. After the formation of the polyamic acid by the reaction of the dianhydride and the diamine in the presence of the solvent, the polyamic acid may be further reacted with a base to provide a water soluble salt of the polyamic acid. Suitable bases include triethylamine, trimethylamine, tributylamine, pyridine, alpha-picoline, beta-picoline, gamma-picoline, and lutidine. These bases can subsequently function as the catalysts in the imidization step that occurs during the curing of a coating of polyamic acid on the aramid fiber.

The polyamic acid comprising structural units (I) "upon imidization" provides a polyimide comprising structural units (VI), 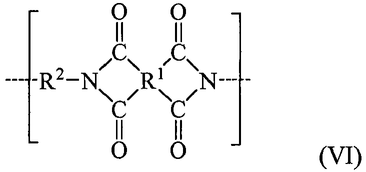 wherein R¹ is a C₂-C₁₂ aliphatic radical, a C₆-C₅₀ cycloaliphatic radical, or a C₆-C₅₀ aromatic radical; and R² is a C₁-C₂₀ aliphatic radical, a C₂-C₂₀ cycloaliphatic radical, or a C₂-C₂₀ aromatic radical. Imidization of the polyamic acid may be effected by using an imidizing agent, an imidizing catalyst or by using a thermal imidizing process as known to those skilled in the art. Non-limiting examples of suitable imidizing agents include acetic acid anhydride, propionic acid anhydride, isobutyric acid anhydride, butyric acid anhydride, and combinations thereof.

In another embodiment, the present invention provides a coated fiber, wherein the coated fiber includes an inner fiber comprising an aramid and an outer coating comprising a polyetherimide deposited on said inner fiber wherein the outer coating comprises a UV stabilizer, a colorant, or both, wherein said coated fiber is in the form of staple fibers, filaments, yarns, cords, or ropes..

In one embodiment, the polyetherimide comprises structural units (II): 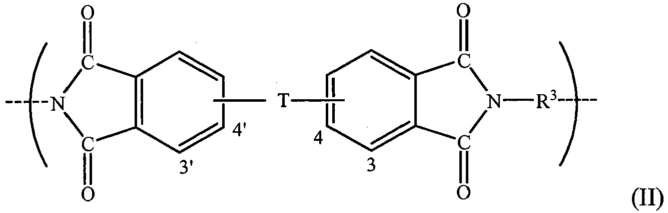 wherein T is a divalent group bridging the 3,3'; 4,4'; 3,4'; or 4,3' positions of the aromatic rings as shown in structural unit (II); wherein T is a bond, O, S, SO, SO₂, a C₁-C₂₀ aliphatic radical, a C₂-C₂₀ cycloaliphatic radical, or a C₂-C₂₀ aromatic radical and R³ is a C₁-C₂₀ aliphatic radical, a C₂-C₂₀ cycloaliphatic radical, or a C₂-C₂₀ aromatic radical.

In one embodiment, the polyetherimide comprises structural units derived from a diamine and structural units derived from a bis(ether anhydride). Non-limiting examples of suitable bis(ether anhydrides) include: 2,2-bis(4-(3,4-dicarboxyphenoxy)phenyl)propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis([4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-3,4-dicarboxyphenoxy)diphenyl-2,2-propane dianhydride; 4-(2,3-dicarboxyphenoxy)4'-(3,4-dicarboxyphenoxy)diphenyl ether dianhydride; 4-(2,3-dicarboxyphenoxy)4'-(3,4-dicarboxyphenoxy)diphenyl sulfide dianhydride; 4-(2,3-dicarboxyphenoxy)-4'-(3,4-dicarboxyphenoxy)benzophenone dianhydride; 4-(2,3-dicarboxyphenoxy)-4'-(3,4-dicarboxyphenoxy)diphenyl sulfone dianhydride; and combinations thereof. In one embodiment, the bis (ether anhydride) is 2,2-bis[4-(3,4-dicarboxyphenoxy)phenyl]propane dianhydride.

Non-limiting examples of suitable diamines include diamines listed above for the polyamic acid. In one embodiment, the diamine is metaphenylene diamine.

In one embodiment, the polyetherimide has a number average molecular weight of more than 5,000 grams per mole. In another embodiment, the polyetherimide has a number average molecular weight of more than 8,000 grams per mole. In yet another embodiment, the polyetherimide has a number average molecular weight of more than 12,000 grams per mole.

In one embodiment, the polyetherimide has a number average molecular weight of less than 5,000 grams per mole. In another embodiment, the polyetherimide has a number average molecular weight of less than 3,000 grams per mole. In yet another embodiment, the polyetherimide has a number average molecular weight of less than 1,500 grams per mole.

In still another embodiment, the polyetherimide has a number average molecular weight in a range between about 500 and about 100,000 grams per mole. In still yet another embodiment, the polyetherimide has a number average molecular weight in a range between about 5,000 and about 50,000 grams per mole.

In one embodiment, the polyamic acid and the polyetherimide may further comprise a crosslinking agent. Suitable crosslinking agents are illustrated by triamines such as 3,5-diaminoaniline, 4-(3,5-diaminophenoxy)aniline, and 4-(3,5-diaminophenyl)aniline. Additional suitable crosslinking agents are illustrated by trianhydrides. Additional suitable crosslinking agents are illustrated by those described in U.S. Patent No. 5,144,000.

As known to those skilled in the art, the amount of polyamic acid present in a solution of polyamic acid in a solvent may be described in terms of "solids content". As used herein the term "solids content" is determined by subjecting a known amount of the polyamic acid solution to a solvent removal step coupled with and an imidization step and thereafter measuring the amount of polyetherimide obtained. One skilled in the art can readily determine the optimum solids content required in the coating formulation to impart the desired characteristics to the coated fiber.

As noted, in various embodiments, the present invention provides a coated fiber comprising (a) an inner fiber comprising an aramid and (b) an outer coating comprising a polyamic acid or a polyetherimide deposited on said inner fiber wherein the inner fiber comprising an aramid, polyamic acid, and /or the polyetherimide may additionally comprise one or more additives. Suitable additives include, for example, thermal stabilizers, antioxidants, ultraviolet (UV) stabilizers, plasticizers, visual effect enhancers, colorants, extenders, antistatic agents, catalyst quenchers, adhesion promoters, fire retardants, flow and leveling additives, surfactants, pigment dispersion aids, processing aids, and crosslinking agents. The different additives that may be incorporated are typically commonly used and known to those skilled in the art.

In one embodiment, the present invention provides a coated fiber comprising (a) an inner fiber comprising an aramid and (b) an outer coating comprising a polyamic acid or a polyetherimide deposited on said inner fiber wherein the outer coating comprises a UV stabilizer, a colorant, or both, wherein said coated fiber is in the form of staple fibers, filaments, yarns, cords, or ropes and wherein the outer coating comprises at least one visual effect enhancer, such as for example, a colorant. Non-limiting examples of colorants may include Solvent Blue 35, Solvent Blue 36, Disperse Violet 26, Solvent Green 3, Anaplast Orange LFP, Perylene Red, and Morplas Red 36. Fluorescent dyes may also be employed including, but not limited to, Permanent Pink R (Color Index Pigment Red 181, from Clariant Corporation), Hostasol Red 5B (Color Index #73300, CAS # 522-75-8, from Clariant Corporation), Macrolex Fluorescent Yellow 10GN (Color Index Solvent Yellow 160:1, from Bayer Corporation), Keyacid Rubine BA and Keydisperse Red 2G, both from Keystone Aniline Corp., IL, USA.

In one embodiment, the present invention provides a coated fiber, wherein the coated fiber includes an inner fiber comprising an aramid and an outer coating comprising a polyamic acid deposited on said inner fiber wherein the outer coating comprises a UV stabilizer, a colorant, or both, wherein said coated fiber is in the form of staple fibers, filaments, yarns, cords, or ropes. In an exemplary embodiment, the inner fiber comprises an aramid comprising structural units (III): 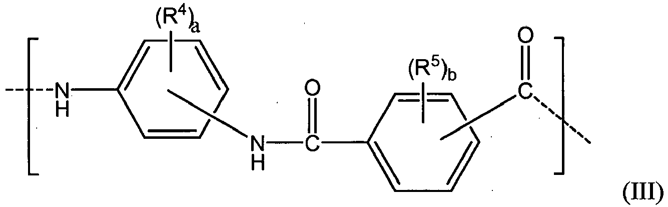 wherein R⁴ and R⁵ are independently at each occurrence a C₁-C₂₀ aliphatic radical, a C₂-C₂₀ cycloaliphatic radical, or a C₂-C₂₀ aromatic radical; and 'a' and 'b' are independently integers having a value of 0 to 4.

In certain embodiments, the inner fiber comprising an aramid may comprise a para-type aramid (p-aramid), a meta-type aramid (m-aramid), or a combination thereof. Suitable p-aramids are illustrated by the p-aramid, poly(p-phenyleneterephthalamide), which comprises structural units (IV):

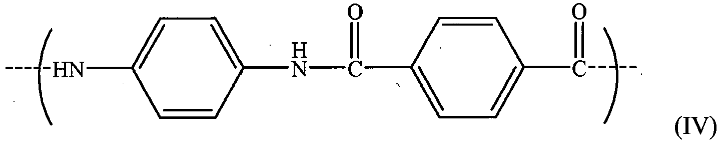

Non-limiting examples of suitable inner fibers comprising an aramid include commercially available KEVLAR® (from DuPont VA, USA) and TWARON® (from Teijin, Japan) fibers which comprise a p-aramid type composition.

Suitable m-aramids are illustrated by the m-aramid, poly(m-phenyleneisophthalamide) comprise structural units (V):

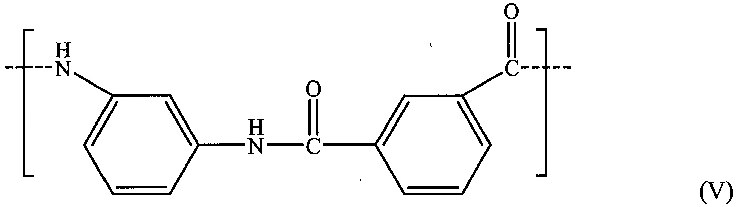

Non-limiting examples of suitable inner fibers comprising an aramid include commercially available NOMEX® (from DuPont, VA, USA) and CONEX® (from Teijin, Japan) fibers which comprise a m-aramid type composition. In another embodiment, the inner fiber comprising an aramid may include a co-polyaramid, for example, copoly-para-phenylene-3,4'-oxy-diphenylene-terephthalamide, as found in commercially available TECHNORA® (from Teijin, Japan) fibers.

Generally fibers are commercially available in a variety of physical forms. The various physical forms include for example, staple fibers, filaments, yarns, cords, and ropes; or fabric, such as for example, woven fabric, knitted fabric, and non-woven fabric. In various embodiments, the inner fiber comprising an aramid may be in any one of the forms listed above.

In still another embodiment, the present invention provides a first method for making a coated fiber comprising, contacting a solution comprising a polyamic acid with a fiber comprising an aramid to provide a coated fiber; wherein the coated fiber comprises (a) an inner fiber comprising the aramid; and (b) an outer coating comprising the polyamic acid deposited on the inner fiber wherein the outer coating comprises a UV stabilizer, a colorant, or both, wherein said coated fiber is in the form of staple fibers, filaments, yarns, cords, or ropes..

In still another embodiment, the present invention provides a second method for making a coated fiber comprising, contacting a solution comprising a polyetherimide with a fiber comprising an aramid to provide a coated fiber; wherein the coated fiber comprises (a) an inner fiber comprising the aramid; and (b) an outer coating comprising the polyetherimide deposited on the inner fiber wherein the outer coating comprises a UV stabilizer, a colorant, or both, wherein said coated fiber is in the form of staple fibers, filaments, yarns, cords, or ropes.

The polyamic acid or the polyetherimide may be coated on the aramid fiber using techniques known to one skilled in the art, such as for example, by dip coating, application via finish roll, impregnation, or spraying.

In one embodiment, the coated fiber is prepared by first exposing the inner fiber to an aqueous polyamic acid solution to deposit the polyamic acid solution onto the surface of the inner fiber wherein the outer coating comprises a UV stabilizer, a colorant, or both, wherein said coated fiber is in the form of staple fibers, filaments, yarns, cords, or ropes. The coated fiber comprising the inner fiber and the outer coating of the polyamic acid may then be subjected to a curing step in which the polyamic acid is converted to a polyetherimide. Typically, the curing step can be carried out at a temperature in a range from about 25°C to about 300°C for a time period less than or equal to about 60 minutes.

The following examples are intended only to illustrate methods and embodiments in accordance with the invention, and as such should not be construed as imposing limitations upon the claims.

### EXAMPLES

### PREPARATION OF POLYAMIC ACID STOCK SOLUTION

To a 3-necked 1 liter round-bottom flask maintained under inert argon atmosphere, fitted with a Dean-Stark apparatus, and a stirrer, was added tetrahydrofuran (THF; 200 milliliters (ml)). The THF was heated to reflux to about 76°C. 4,4'-(4,4'-isopropylidenediphenoxy)bis(phthalic anhydride) (BPADA) (67.53 grams (g), 129.83 mmoles; obtained from GE Plastics Mt. Vernon, Indiana) was added to the refluxing THF over a period of about 10 minutes. After dissolution of 4,4'-(4,4'-isopropylidenediphenoxy)bis(phthalic anhydride); a solution of 1,3-phenylenediamine (14 g, 129.46 mmoles; from DuPont, VA, USA) in 100 ml of THF, was added to the flask under reflux, over a period of about 10 minutes. After maintaining the reaction mixture at reflux for another 80 minutes, about 100 ml of distillate was distilled out. Triethylamine (26.32 g) and deionized (DI) water (400 ml) were then added to the flask over a period of about 25 minutes while simultaneously continuing the distillation. The total amount of distillate collected was about 280 ml. The flask was then cooled to room temperature (about 25°C) to provide an aqueous solution of the triethylamine salt of the polyamic acid.

### Determination Of Polyamic Acid Concentration in the Polyamic Acid Stock Solution.

A weighed sample (about 2 to 3 g) of the polyamic acid stock solution prepared above, was heated in a glass vial to 250°C for about 15 minutes to provide a solid oligomeric polyimide. The solid was weighed and the weight percent solids in the polyamic acid stock solution was calculated. The weight percent solids corresponds to the concentration of polyamic acid in the polyamic acid stock solution. As described above, the solids content entailed subjecting the polyamic acid to a solvent removal step coupled with and an imidization step and thereafter the amount ofpolyetherimide obtained was measured. The weight percent solids was found to be about 15.5 percent.

### Molecular Weight Of Polyimide Formed From Polyamic Acid:

A drop of the polyamic acid stock solution was heated to 250°C in an open vessel for about 15 minutes. This effected both removal of the solvent and conversion of the polyamic acid to the corresponding polyimide (curing). The resultant solid polyetherimide was dissolved in chloroform and the molecular weight measured by gel permeation chromatography. The weight average molecular weight (Mw) and the number average molecular weight (Mn) of the cured polyimide were found to be 69,140 grams per mole and 23,406 grams per mole respectively.

### Glass Transition Temperature (Tg) Of Polyimide:

In a similar manner as described above, a drop of the polyamic acid stock solution was heated to 250°C for about 15 minutes and Tg of the resultant solid (215°C) was measured by differential scanning calorimetry at a scanning rate of 10°C/minute.

### EXAMPLES 1 to 3 provide a method for preparing coating formulations- without colorant.

Coating formulations-without colorant were prepared by diluting the polyamic acid stock solution with deionized (DI) water. The polyamic acid stock solution (5.3 ml) was first diluted using DI water (50 ml) to provide a second stock solution having a polyamic acid concentration of about 14 weight percent. A series of coating formulations used in Examples 1 to 3 were prepared by combining 5.0 g of the second stock solution and an additional amount of DI water in a flask and stirring using a magnetic stirrer for about 30 minutes to ensure uniform mixing. The amount of DI water added to the second stock solution and the resultant concentration of the polyamic acid in each coating formulation in Examples 1 to 3 are provided in Table 1.

**Table 1**

| Example | Amount of distilled water added to 5.0 g of second stock solution | Concentration of polyamic acid in the coating formulation (weight percent) |
|---|---|---|
| 1 | 5 | 7 |
| 2 | 1.25 | 11.2 |
| 3 | 0 | 14 |

### EXAMPLES 4 and 5 provide a method for preparing coating formulations comprising a colorant.

Coating formulations with colorant were prepared in a similar manner as described for Examples 1 above, except that in addition to DI water about 3 weight percent of colorant based on the polyamic acid in the second stock solution was added. A mixture of the second stock solution (5.0 g), DI water (5 ml) and a colorant (210 mg) was stirred using a magnetic stirrer for about 12 hours at about 40°C to obtain a homogeneous coating formulation comprising the colorant. Blue and red colored coating formulations were prepared using a blue colorant Keyacid Rubine BA (Example 4) and a red colorant Keydisperse Red 2G (Example 5) respectively, both obtained from Keystone Aniline Corp., IL, USA.

### EXAMPLES 6 to 13 illustrate method(s) for coating commercially available KEVLAR® fiber.

### General Method Employed for Coating Commercially Available KEVLAR® fiber.

The coating formulations prepared in Examples 1 to 5 above were used to coat commercially available KEVLAR® fibers, (from DuPont, VA, USA). The KEVLAR® available as a cord was untwisted to obtain individual yarns of KEVLAR® fiber. These yarns were carefully wiped with hexane using KIMWIPES to clean the fiber surface to remove residual oil or other contaminants that could interfere with application and adhesion of the coating. The cleaned yarns were then dried in a vacuum oven at a temperature of about 60°C for about an hour. A clean and dry KEVLAR® yarn was then dipped in one the coating formulations, prepared in Examples 1 to 5, for a specific amount of time (dip time) as shown in Table 2. The yarns were then cured by placing the coated yarn in a convection oven for about 15 minutes at 250°C. Heating the coated yarn resulted in the conversion of the polyamic acid coating to a polyimide coating. The resultant coated KEVLAR® fiber comprised a coating of polyimide on the surface of the KEVLAR® fiber. The thickness of the coated fibers was measured using an optical microscope ((Zeiss Standard photomicroscope (Model. 9901, Carl Zeiss Ltd., Oberkochen, West Germany)).

Flame resistance of the coated and uncoated fibers was measured by Pyrolysis-Combustion Flow Calorimetry (PCFC) using a Pyrolyzer available from Galaxy Scientific Corp. The total amount of heat required to char the fibers was measured using PCFC and was compared with heat required to char uncoated KEVLAR® fibers. The data obtained from the PCFC is provided in Table 3. With reference to Table 3: The Heat Release Capacity ("HR Cap" in joules per gram-degree Kelvin (J/g-K)) is equal to the sum of the peak heat release rate (Watts per gram (W/g)) divided by the heating rate (degree Kelvin/second K/s); The Total Heat Release ("Total HR" in kilojoule) per gram (kJ/g)) is equal to the Integrated heat release rate (W/g) with respect to time (s); The Char percent is equal to the Weight (mg) of the sample residue after the test divided by the original sample weight (mg); and The Peak Temperature (T peak in °C) is equal to Temperature of the highest heat release rate (Peak HRR, W/g) obtained for the coated fiber prepared in Example 9 and for the commercial KEVLAR ® fiber. The data provided in Table 3 indicates that the coating material used in Example 9 exhibited combustion properties similar to or better than those of commercial KEVLAR® fiber suggesting that the applied coating does not affect the fire resistance properties of the underlying KEVLAR inner fiber".

**Table 2**

| Example | Dip time (seconds) | Concentration of polyamic acid in the coating formulation (weight percent) | Colorant (mg) |
|---|---|---|---|
| 6 | 30 | 7 | 0 |
| 7 | 30 | 11.2 | 0 |
| 8 | 30 | 14 | 0 |
| 9 | 120 | 7 | 0 |
| 10 | 120 | 11.2 | 0 |
| 11 | 120 | 14 | 0 |
| 12 | 120 | 7 | 210 (blue) |
| 13 | 120 | 7 | 210 (red) |

**Table 3**

| Example | HR Cap (J/g-K) | Peak HRR (W/g) | Total HR (kJ/g) | T peak (°C) | Char (percent) |
|---|---|---|---|---|---|
| Example 9 | 211 | 192 | 10.6 | 578 | 51.7 |
| KEVLAR® | 384 | 350 | 13.2 | 623 | 37.8 |

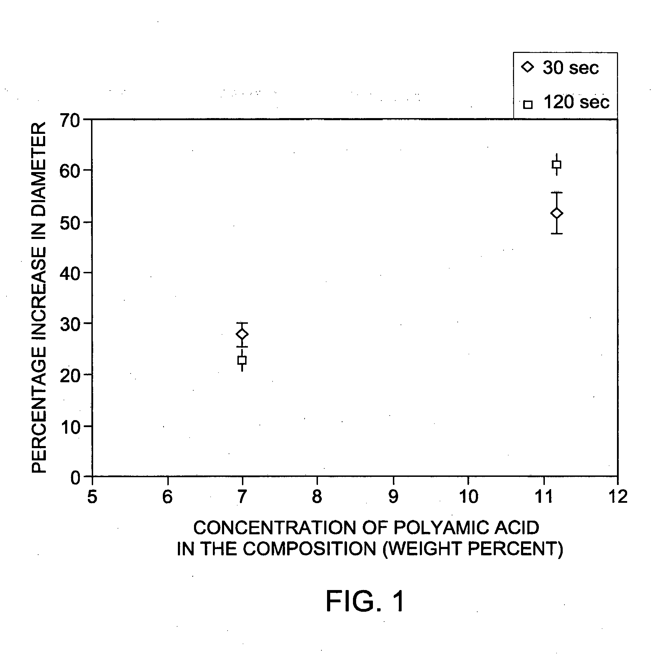

Fig. 1 is a graphical representation of coating thickness as a function of time for which fibers are dipped in the coating formulation and the concentration of the coating formulation for the coated KEVLAR® fibers prepared in Examples 6 to 13. The Y-axis represents the diameter of the coated fiber and the X-axis represents the concentration of the polyamic acid in the coating formulation. The thickness obtained for a dip time of 30 seconds and 120 seconds were then plotted. The data reveal that as the concentration of polyamic acid in the coating formulation increases and as the dip time increases an increase in the thickness of the coating on the inner KEVLAR® fiber increases.

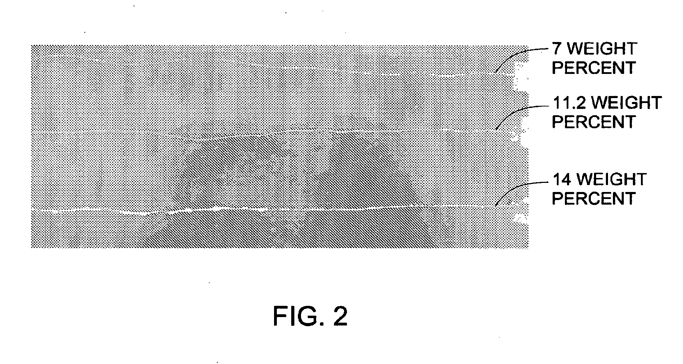

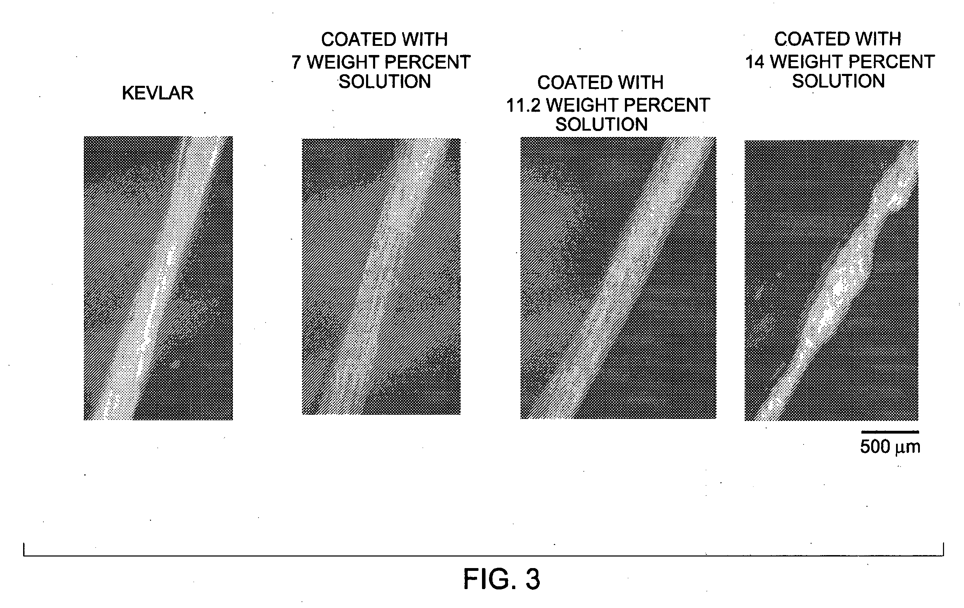

Fig. 2 is a photograph of KEVLAR® fibers coated using coating formulations prepared in Examples 9 to 11. The thickness of the coating on the inner KEVLAR® fiber is seen to increase with the increase in the concentration of the polyamic acid in the coating formulation from 7 to 14 weight percent. However, a deterioration in the quality of the coating is observed at higher concentrations. The deterioration is indicated by the irregularity in the coated fiber prepared in Example 11 as seen in Fig. 2. Photographs taken through an optical microscope ((Zeiss Standard photomicroscope (Model. 9901, Carl Zeiss Ltd., Oberkochen, West Germany)) are provided in Fig. 3. Photographs show that the coated fibers prepared in Examples 9 and 10 have a smoother coated surface when compared to the coated fiber prepared in Example 11 which clearly has irregular surface coating. The deterioration in the coating quality may be attributed to the formation of bubbles on the fiber surface as the thickness of the coating formulation is increased.

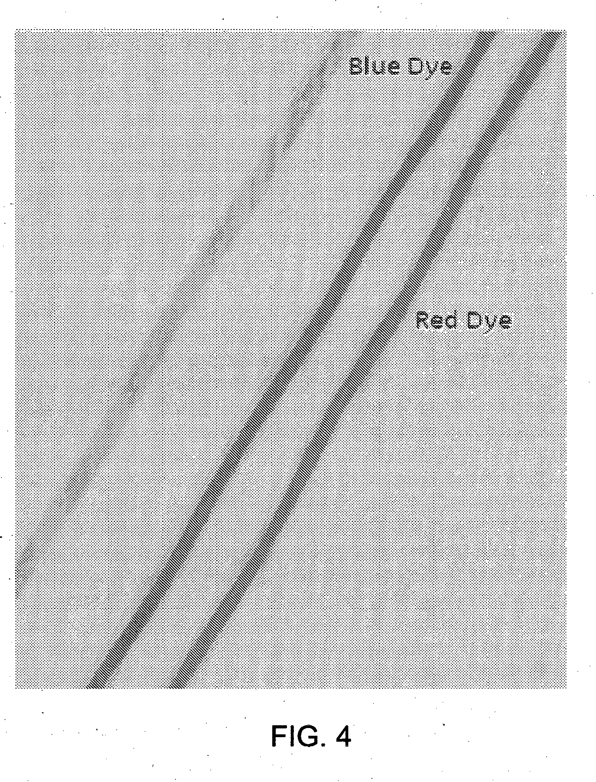

Fig. 4 shows a photographic comparison between KEVLAR fibers coated with one of three polyimide compositions, one which contained no dye and two of which contained either a red dye or a blue dye. The dye containing coated fibers shown in Fig. 4 were prepared in Example 12 and 13. Fig. 4 clearly shows that the fibers are uniformly dyeable using the coating formulations comprising a colorant.

The foregoing examples are merely illustrative, serving to demonstrate only some of the features of the invention. As used in the claims, the word "comprises" and its grammatical variants logically also subtend and include phrases of varying and differing extent such as for example, but not limited thereto, "consisting essentially of' and "consisting of." Where necessary, ranges have been supplied, those ranges are inclusive of all sub-ranges there between.

## Claims

1. A coated fiber comprising:
(a) an inner fiber comprising an aramid; and
(b) an outer coating comprising a polyamic acid deposited on said inner fiber wherein the outer coating comprises a UV stabilizer, a colorant, or both, wherein said coated fiber is in the form of staple fibers, filaments, yarns, cords, or ropes.

2. A coated fiber comprising:
(a) an inner fiber comprising an aramid; and
(b) an outer coating comprising a polyetherimide deposited on said inner fiber, wherein the outer coating comprises a UV stabilizer, a colorant, or both, wherein said coated fiber is in the form of staple fibers, filaments, yarns, cords, or ropes.

3. The coated fiber according to claim 1 or 2, wherein the polyamic acid or polyetherimide has a number average molecular weight of more than 5,000 grams per mole.

4. The coated fiber according to claim 1 or 2, wherein the polyamic acid or polyetherimide has a number average molecular weight of less than 5000 grams per mole.

5. The coated fiber according to claim 1, 2, 3, or 4, further comprising an additive selected from the group consisting of thermal stabilizers, antioxidants, ultraviolet (UV) stabilizers, plasticizers, visual effect enhancers, colorants, extenders, antistatic agents, catalyst quenchers, adhesion promoters, fire retardants, flow and leveling additives, surfactants, pigment dispersion aids, and processing aids.

6. The coated fiber according to any of claims 1 or 3-5, wherein the outer coating comprises a polyamic acid and the polyamic acid comprises structural units (I): 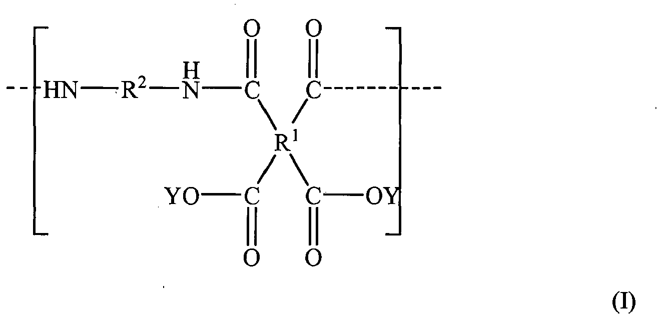 wherein R¹ a C₂-C₁₂ aliphatic radical, a C₆-C₅₀ cycloaliphatic radical, or a C₆-C₅₀ aromatic radical; R² is a C₁-C₂₀ aliphatic radical, a C₂-C₂₀ cycloaliphatic radical, or a C₂-C₂₀ aromatic radical; and Y is hydrogen, or a charge-balancing cation.

7. The coated fiber according to any of claims 2 to 5, wherein the outer coating comprising a polyetherimide and the polyetherimide comprises structural units (II): 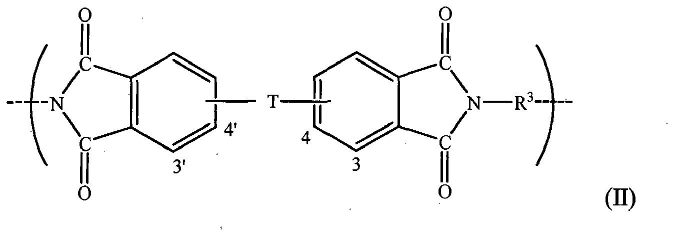 wherein T is a divalent group bridging the 3,3'; 4,4'; 3,4'; or 4,3' positions of the aromatic rings as shown in structural unit (II); wherein T is a bond, O, S, SO, SO₂, a C₁-C₂₀ aliphatic radical, a C₂-C₂₀ cycloaliphatic radical, or a C₂-C₂₀ aromatic radical and R³ is a C₁-C₂₀ aliphatic radical, a C₂-C₂₀ cycloaliphatic radical, or a C₂-C₂₀ aromatic radical.

8. The coated fiber according to any of the preceding claims, wherein the aramid comprises structural units (III): 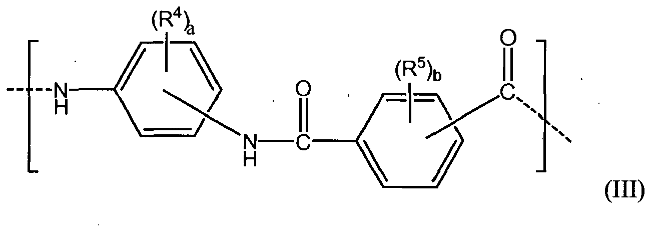 wherein R⁴ and R⁵ are independently at each occurrence a C₁-C₂₀ aliphatic radical, a C₂-C₂₀ cycloaliphatic radical, or a C₂-C₂₀ aromatic radical; and 'a' and 'b' are independently integers having a value of 0 to 4.

9. The coated fiber of claim 8, wherein the aramid comprises structural units (IV):

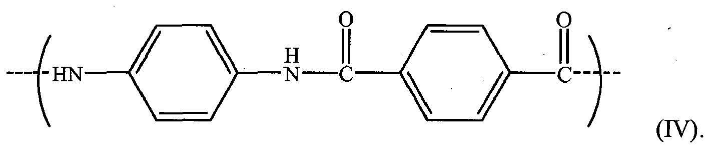

10. The coated fiber of claim 8, wherein the aramid comprises structural units (V):

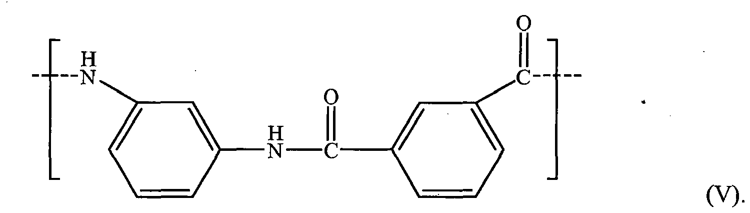

11. A method for making a coated fiber comprising:
contacting an aqueous solution comprising a polyamic acid with a fiber comprising an aramid to provide a coated fiber; wherein said coated fiber comprises
(a) an inner fiber comprising the aramid; and
(b) an outer coating comprising the polyamic acid deposited on said inner fiber wherein the outer coating comprises a UV stabilizer, a colorant, or both, wherein said coated fiber is in the form of staple fibers, filaments, yarns, cords, or ropes.

12. The method of claim 11 further comprising curing the coated fiber to convert the polyamic acid to polyetherimide.

## Patentansprüche

1. Beschichtete Faser, die Folgendes umfasst:
(a) eine innere Faser, die ein Aramid umfasst; und
(b) eine äußere Beschichtung, die eine Polyamidsäure umfasst und auf der inneren Faser abgeschieden ist, wobei die äußere Beschichtung einen UV-Stabilisator, einen Farbstoff oder beides umfasst, wobei die beschichtete Faser in der Form von Stapelfasern, Filamenten, Garnen, Kordeln oder Seilen ist.

2. Beschichtete Faser, die Folgendes umfasst:
(a) eine innere Faser, die ein Aramid umfasst; und
(b) eine äußere Beschichtung, die ein Polyetherimid umfasst und auf der inneren Faser abgeschieden ist, wobei die äußere Beschichtung einen UV-Stabilisator, einen Farbstoff oder beides umfasst, wobei die beschichtete Faser in der Form von Stapelfasern, Filamenten, Garnen, Kordeln oder Seilen ist.

3. Beschichtete Faser nach Anspruch 1 oder 2, wobei die Polyamidsäure oder das Polyetherimid ein zahlengemitteltes Molekulargewicht von mehr als 5000 Gramm pro Mol aufweist.

4. Beschichtete Faser nach Anspruch 1 oder 2, wobei die Polyamidsäure oder das Polyetherimid ein zahlengemitteltes Molekulargewicht von weniger als 5000 Gramm pro Mol aufweist.

5. Beschichtete Faser nach Anspruch 1, 2, 3 oder 4, die weiterhin ein Additiv umfasst, das aus der Gruppe bestehend aus Wärmestabilisatoren, Antioxidationsmitteln, Ultraviolettlichtstabilisatoren (UV-Stabilisatoren), Weichmachern, Mitteln zur Verbesserung des optischen Aussehens, Farbstoffen, Streckmitteln, Antistatika, Katalysatorquenchern, Haftvermittlern, flammhemmenden Mitteln, Verlaufs- und Nivelliermitteln, Tensiden, Pigmentdispergierhilfsmitteln und Verarbeitungshilfsstoffen ausgewählt ist.

6. Beschichtete Faser nach einem der Ansprüche 1 oder 3 - 5, wobei die äußere Beschichtung eine Polyamidsäure umfasst und die Polyamidsäure Struktureinheiten (I) umfasst: 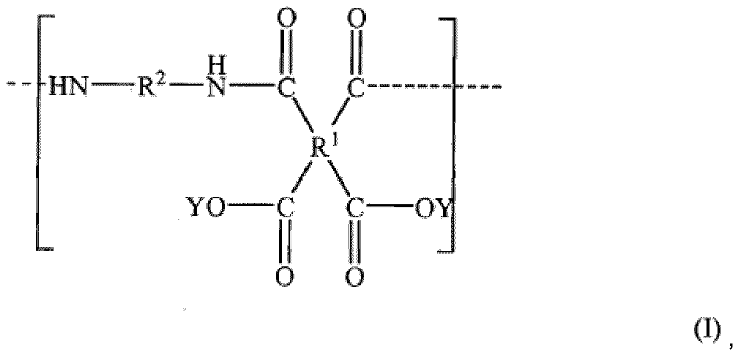 wobei R¹ ein aliphatischer C₂-C₁₂-Rest, ein cycloaliphatischer C₆-C₅₀-Rest oder ein aromatischer C₆-C₅₀-Rest ist; R² ein aliphatischer C₁-C₂₀-Rest, ein cycloaliphatischer C₂-C₂₀-Rest oder ein aromatischer C₂-C₂₀-Rest ist und Y Wasserstoff oder ein ladungsausgleichendes Kation ist.

7. Beschichtete Faser nach einem der Ansprüche 2 bis 5, wobei die äußere Beschichtung ein Polyetherimid umfasst und das Polyetherimid Struktureinheiten (II) umfasst: 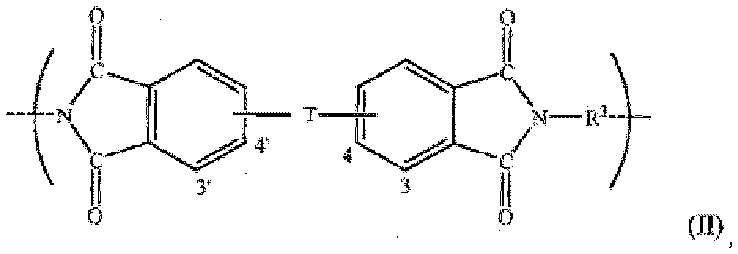 wobei T eine zweiwertige Gruppe ist, die die 3,3'-; 4,4'-; 3,4'- oder 4,3'-Positionen der aromatischen Ringe überbrückt, wie in Struktureinheit (II) gezeigt; wobei T eine Bindung, O, S, SO, SO₂, ein aliphatischer C₁-C₂₀-Rest, ein cycloaliphatischer C₂-C₂₀-Rest oder ein aromatischer C₂-C₂₀-Rest ist und R³ ein aliphatischer C₁-C₂₀-Rest, ein cycloaliphatischer C₂-C₂₀-Rest oder ein aromatischer C₂-C₂₀-Rest ist.

8. Beschichtete Faser nach einem der vorhergehenden Ansprüche, wobei das Aramid Struktureinheiten (III) umfasst: 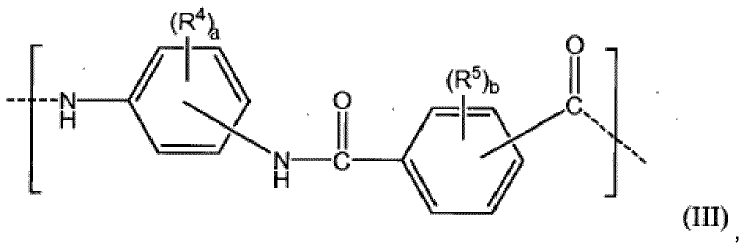 wobei R⁴ und R⁵ unabhängig bei jedem Auftreten ein aliphatischer C₁-C₂₀-Rest, ein cycloaliphatischer C₂-C₂₀-Rest oder ein aromatischer C₂-C₂₀-Rest sind und "a" und "b" unabhängig ganze Zahlen mit einem Wert von 0 bis 4 sind.

9. Beschichtete Faser nach Anspruch 8, wobei das Aramid Struktureinheiten (IV) umfasst:

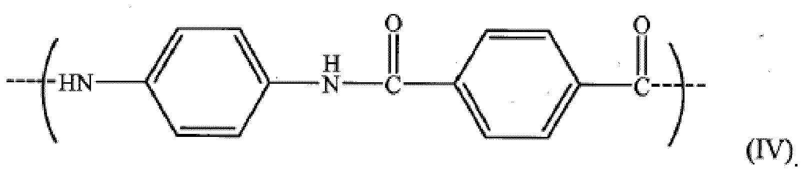

10. Beschichtete Faser nach Anspruch 8, wobei das Aramid Struktureinheiten (V) umfasst:

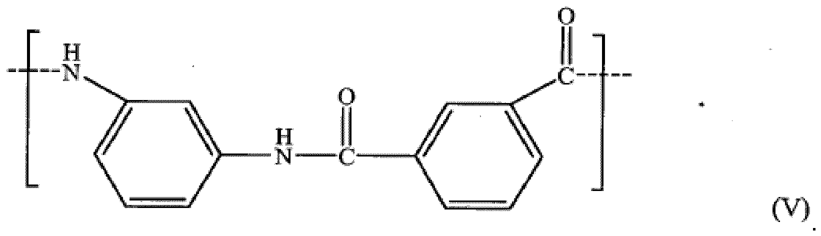

11. Verfahren zur Herstellung einer beschichteten Faser, das Folgendes umfasst:
Inkontaktbringen einer wässrigen Lösung, die eine Polyamidsäure umfasst, mit einer Faser, die ein Aramid umfasst, um eine beschichtete Faser bereitzustellen; wobei die beschichtete Faser Folgendes umfasst:
(a) eine innere Faser, die das Aramid umfasst; und
(b) eine äußere Beschichtung, die die Polyamidsäure umfasst und auf der inneren Faser abgeschieden ist, wobei die äußere Beschichtung einen UV-Stabilisator, einen Farbstoff oder beides umfasst, wobei die beschichtete Faser in der Form von Stapelfasern, Filamenten, Garnen, Kordeln oder Seilen ist.

12. Verfahren nach Anspruch 11, das weiterhin das Härten der beschichteten Faser umfasst, um die Polyamidsäure in Polyetherimid umzuwandeln.

## Revendications

1. Fibre revêtue comprenant :
(a) une fibre interne comprenant un aramide ; et
(b) un revêtement externe comprenant un acide polyamique déposé sur ladite fibre interne, dans laquelle le revêtement externe comprend un agent anti-UV, un colorant, ou les deux, dans laquelle ladite fibre revêtue est sous la forme de fibres discontinues, de filaments, de fils, de cordons ou de cordes.

2. Fibre revêtue comprenant :
(a) une fibre interne comprenant un aramide ; et
(b) un revêtement externe comprenant un polyétherimide déposé sur ladite fibre interne, dans laquelle le revêtement externe comprend un agent anti-UV, un colorant, ou les deux, dans laquelle ladite fibre revêtue est sous la forme de fibres discontinues, de filaments, de fils, de cordons ou de cordes.

3. Fibre revêtue selon la revendication 1 ou 2, dans laquelle l'acide polyamique ou le polyétherimide a un poids moléculaire moyen en nombre de plus de 5 000 grammes par mole.

4. Fibre revêtue selon la revendication 1 ou 2, dans laquelle l'acide polyamique ou le polyétherimide a un poids moléculaire moyen en nombre inférieur à 5 000 grammes par mole.

5. Fibre revêtue selon la revendication 1, 2, 3 ou 4, comprenant en outre un additif choisi dans le groupe constitué par les stabilisants thermiques, les antioxydants, les agents anti-ultraviolet (UV), les plastifiants, les amplificateurs d'effet visuel, les colorants, les matières de charge, les agents antistatiques, les désactivateurs de catalyseur, les promoteurs d'adhérence, les agents ignifuges, les additifs fluidifiants et égalisants, les tensioactifs, les auxiliaires de dispersion de pigment, et les auxiliaires de fabrication.

6. Fibre revêtue selon l'une quelconque des revendications 1 ou 3 à 5, dans laquelle le revêtement externe comprend un acide polyamique et l'acide polyamique comprend des motifs structuraux (I) : 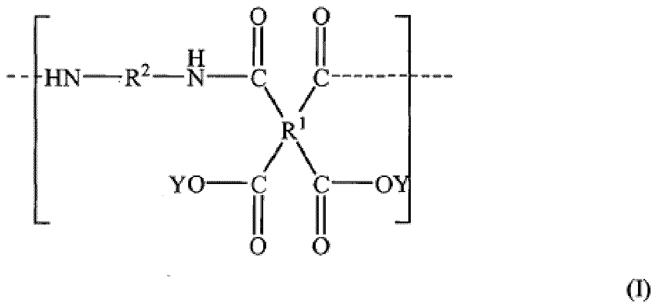 dans lequel R¹ est un radical aliphatique en C₂-C₁₂, un radical cycloaliphatique en C₆-C₅₀, ou un radical aromatique en C₆-C₅₀ ; R² est un radical aliphatique en C₁-C₂₀, un radical cycloaliphatique en C₂-C₂₀, ou un radical aromatique en C₂-C₂₀ ; et Y est un hydrogène, ou un cation équilibrant la charge.

7. Fibre revêtue selon l'une quelconque des revendications 2 à 5, dans laquelle le revêtement externe comprend un polyétherimide et le polyétherimide comprend des motifs structuraux (II) : 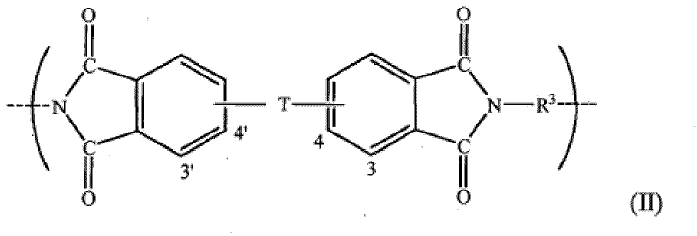 dans lequel T est un groupe divalent pontant les positions 3,3' ; 4,4' ; 3,4' ; ou 4,3' des cycles aromatiques comme indiqué dans le motif structural (II) ; dans lequel T est une liaison, O, S, SO, SO₂, un radical aliphatique en C₁-C₂₀, un radical cycloaliphatique en C₂-C₂₀, ou un radical aromatique en C₂-C₂₀ et R³ est un radical aliphatique en C₁-C₂₀, un radical cycloaliphatique en C₂-C₂₀, ou un radical aromatique en C₂-C₂₀.

8. Fibre revêtue selon l'une quelconque des revendications précédentes, dans laquelle l'aramide comprend des motifs structuraux (III) : 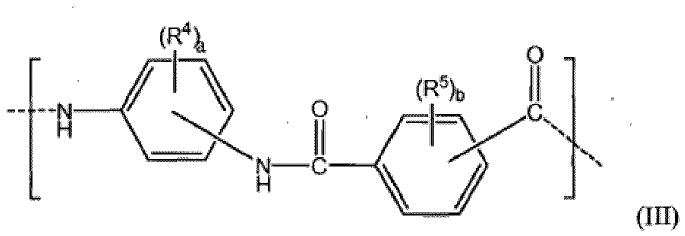 dans lequel R⁴ et R⁵ sont indépendamment à chaque occurrence un radical aliphatique en C₁-C₂₀, un radical cycloaliphatique en C₂-C₂₀, ou un radical aromatique en C₂-C₂₀ ; et « a » et « b » sont indépendamment des nombres entiers ayant une valeur de 0 à 4.

9. Fibre revêtue selon la revendication 8, dans laquelle l'aramide comprend des motifs structuraux (IV) :

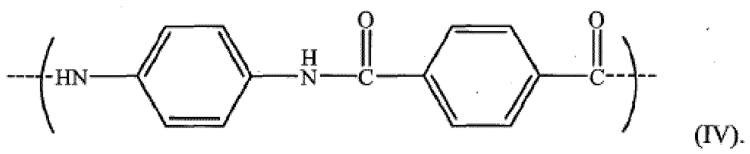

10. Fibre revêtue selon la revendication 8, dans laquelle l'aramide comprend des motifs structuraux (V) :

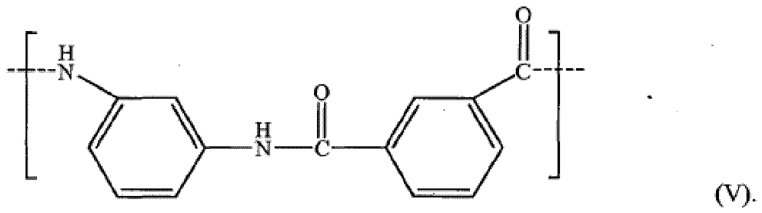

11. Procédé de fabrication d'une fibre revêtue comprenant :
la mise en contact d'une solution aqueuse comprenant un acide polyamique avec une fibre comprenant un aramide pour fournir une fibre revêtue ; dans laquelle ladite fibre revêtue comprend
(a) une fibre interne comprenant l'aramide ; et
(b) un revêtement externe comprenant l'acide polyamique déposé sur ladite fibre interne, dans laquelle le revêtement externe comprend un agent anti-UV, un colorant, ou les deux, dans laquelle ladite fibre revêtue est sous la forme de fibres discontinues, de filaments, de fils, de cordons ou de cordes.

12. Procédé selon la revendication 11, comprenant en outre le durcissement de la fibre revêtue pour convertir l'acide polyamique en polyétherimide.
